# EUROPÄISCHE PATENTSCHRIFT

(11) **EP 1 459 932 B1**
(45) Veröffentlichungstag und Bekanntmachung des Hinweises auf die Patenterteilung: **30.09.2009**
(21) Anmeldenummer: 04005928.9
(22) Anmeldetag: 12.03.2004
(51) Int. Cl.: B60P 7/10

(54) **Vorrichtung zur Sicherung der Schrägstellung eines einseitig oder auch beidseitig an einem Transporterfahrzeug oder kleineren Fahrzeug angebrachten Halterungsrahmens**
Apparatus for securing the inclination of transport rack on a vehicle
Dispositif pour assurer l'inclinaison d'un cadre-transporteur sur un véhicule

(30) Priorität: 17.03.2003 DE 10311535
(43) Veröffentlichungstag der Anmeldung: 22.09.2004
(73) Patentinhaber: HEGLA Fahrzeug- u. Maschinenbau GmbH & Co. KG, D-37688 Beverungen (DE)
(72) Erfinder: Rüschoff, Gerhard, 37688 Beverungen (DE); Vollbracht, Manfred, 37688 Beverungen (DE); Jost, Martin, 37688 Beverungen (DE)
(74) Vertreter: Reichel, Wolfgang

(56) Entgegenhaltungen:
- EP-A- 0 715 987
- EP-A- 0 749 921
- DE-A- 4 107 975
- DE-C- 866 173
- DE-U- 20 020 439
- GB-A- 2 169 565

## Beschreibung

Die Erfindung betrifft eine Vorrichtung zur Sicherung der Schrägstellung eines einseitig oder auch beidseitig an einem Transporterfahrzeug oder kleineren Fahrzeug angebrachten, für den Transport von plattenförmigen Gegenständen vorgesehenen Halterungsrahmens während des Be- oder Entladens wobei mindestens eine ausfahrbare Abstützung am Transporterfahrzeug oder kleineren Fahrzeug und den daran einseitig oder beidseitig angebrachten Halterungsrahmen vorgesehen ist, die in ihrem ausgefahrenem Zustand den Halterungsrahmen in seiner Schrägstellung justiert..

Vorrichtungen zur Sicherung der Schrägstellung eines an einem LKW-Fahrzeug angebrachten für den Transport von plattenförmigen Gegenständen vorgesehenen Halterungsrahmens sind seit langem bekannt (DE 41 07 975 A). Bei dieser bekannten Vorrichtung ist der Halterungsrahmen als Schwenkrahmen ausgebildet, der mit Hilfe eines oder mehrerer Schwenklager um seinen oberen Bereich schwenkbar ist, damit er beim Be- und Entladen in eine Schrägstellung gebracht werden kann, in der die plattenförmigen Gegenstände ohne Umkippgefahr aufliegen. Der als Schwenkrahmen ausgebildete Halterungsrahmen ist in seiner Schrägstellung mit Hilfe der ausfahrbaren Abstützung justierbar. Die ausfahrbare Abstützung wirkt zwischen dem Fahrzeug und dem Schwenkrahmen.Für den Transport wird der Schwenkrahmen durch Einführen der Abstützung in eine senkrechte Stellung geschwenkt und dort fixiert, so daß die maximal zulässige Gesamtbreite des LKW nicht überschritten ist.

Der Erfindung liegt die Aufgabe zugrunde eine einfache Vorrichtung zur Sicherung der Schrägstellung des an einem Transporterfahrzeug oder kleineren Fahrzeug einseitig oder auch beidseitig angebrachten, für den Transport von plattenförmigen Gegenständen vorgesehenen Halterungsrahmens zu schaffen, der in einfacher Weise eine Justierung des fest angebrachten Halterungsrahmens beim Be- und Entladen ermöglicht.

Diese Aufgabe wird durch die Merkmale des kennzeichnenden Teils des Anspruchs 1 gelöst.

Die mindestens eine vor dem Be- oder Entladen, also bei stehendem Fahrzeug, bis zum Untergrund ausfahrbare als mindestens ein schwenkbarer Ärm ausgebildete Abstützung ermöglicht in einfacher Weise eine Sicherung der Schrägstellung des Halterungsrahmens, so daß die plattenförmigen Gegenstände stabil an dem Halterungsrahmen anlehnen und ohne Gefahr von Umkippen einzeln leicht entnommen werden.

Mit Hilfe der mindestens einen schwenkbaren Arm aufweisenden Abstützung läßt sich eine kontinuierliche Justierung der Schrägstellung in einfacher Weise erreichen, da horizontale Bewegungen des Fahrzeugs sehr gut aufgenommen werden können. Auch erfolgt eine gute Anpassung an Unebenheiten des Untergrunds durch die sich am äußeren Ende jedes schwenkbaren Abstützungsarms eine drehbare Abstützungsrolle befindet.

Die mindestens eine ausfahrbare Abstützung unterstützt das Fahrzeug und den daran angebrachten Halterungsrahmen, so daß im Be- und Entladevorgang das Einsinken des Fahrzeugs auf der Ladeseite und die sich daraus ergebende Instabilität der plattenförmigen Gegenstände verhindert wird.

Im einzelnen ergibt sich für des Beladen folgender Ablauf: Vor dem Beladen wird der Halterungsrahmen in seiner Schrägstellung dadurch justiert und gesichert, daß die mindestens eine Abstützung bei zum Untergrund ausgefahren wird. Es werden die plattenförmigen Gegenstände, insbesondere Glasplatten, auf den Halterungsrahmen aufgesetzt. Sobald die aufgeladenen plattenförmigen Gegenstände mit Hilfe von Gurten oder üblichen Spannlatten gesichert sind, kann die Abstützung eingefahren werden. Da der Halterungsrahmen sich auf einer Seite des Transporterfahrzeugs befindet, wird das Fahrzeug aufgrund seiner gefederten Aufhängung in eine Schräglage übergehen, in der es jedoch ohne weiteres gefahren werden kann. Beim Entladen wird die mindestens eine Abstützung, sobald der Transporter seinen Standplatz erreicht hat, herausgefahren, um die Schrägstellung des Halterungsrahmens so einzustellen, daß die plattenförmigen Gegenstände sicher am Halterungsrahmen anliegen. In der Regel ist ein Neigungswinkel von 4° zufriedenstellend. Eine latente Unfallgefahr durch Abkippen oder Umfallen nach Lösen der Plattensicherungseinrichtungen, wie Gurten oder Spannlatten, ist hierdurch ausgeschlossen. Eine solche Unfallgefahr wäre bei einseitig beladenem Fahrzeug bei Unterschreiten eines minimalen Neigungswinkels unmittelbar gegeben.

Am Fahrzeug ist in der Regel ein Bedienungselement vorgesehen, mit dessen Hilfe die Abstützung aus- bzw. eingefahren werden kann.

Vorzugsweise sind am Fahrzeug oder am Halterungsrahmen Anzeigevorrichtungen angebracht, die die gemessene Neigung des Halterungsrahmens anzeigen oder bei einem Neigungswinkel des Halterungsrahmens der kleiner ist als für die stabile Auflage ein Warnsignal abgeben.

Die ausfahrbare Abstützung ist vorzugsweise am Halterungsrahmen angebracht, so daß die am Halterungsrahmen angesetzten Last direkt abgefangen werden kann und eine Schieflage des Fahrzeugs vermieden wird.

Die Abstützungsrollen weisen, vorzugsweise eine Achse parallel zur Fahrzeugachse auf, durch die sie in ihrer Achsrichtung gegenüber einer Federkraft seitlich verschiebbar sind.

Eine Ausführungsform der Erfindung wird nachstehend anhand der Zeichnungen beispielshalber beschrieben. Dabei zeigen:
Fig. 1 ein Transporterfahrzeug mit einem Halterungsrahmen und der Vorrichtung zur Sicherung der Schrägstellung von der Seite,
Fig. 2 das Transporterfahrzeug nach Figur 1 von seiner Rückseite, wobei die Schrägstellung des Halterungsrahmens und die Abstützung als Vorrichtung zur Sicherung der Schrägstellung erkennbar ist,
Fig. 3 eine Prinzipdarstellung einer digitalen Anzeigevorrichtung,
Fig. 4 eine Prinzipdarstellung einer optischen Warneinrichtung mit Kontrolleuchten,
Fig. 5 einen akustischen Signalgeber,
Fig. 6 eine Vorrichtung zur Sicherung der Schrägstellung mit einem Schwenkarm, der sich in eingezogener Stellung befindet,
Fig. 7 die Vorrichtung zur Sicherung der Schrägstellung nach Fig. 6 mit ausgefahrenem Schwenkarm,
Fig. 8 den Transporter nach Figur 1 mit beladenem Halterungsrahmen, wobei die Abstützung nicht voll bzw. gerade bis zum Boden ausgefahren ist,
Fig. 9 das Fahrzeug nach Figur 8 mit beladenem Halterungsrahmen, wobei die Abstützung das Fahrzeug ausrichtet,
Fig. 10 die Abstützung in einem schwenkbaren Arm,
Fig. 11 die Abstützung nach Figur 10 in voll ausgefahrenem Zustand,
Fig. 12 die Abstützung nach Figur 10 in perspektivischer Ansicht im eingefahrenen Zustand,
Fig. 13 die Abstützung nach Figur 12 in perspektivischer Ansicht im ausgefahrenen Zustand.

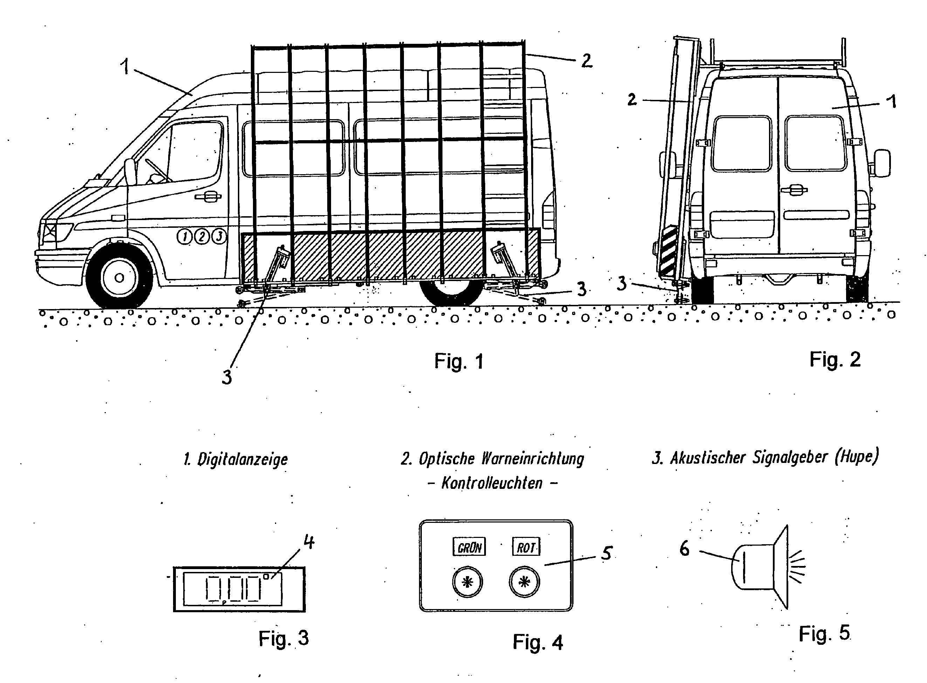

Figur 1 zeigt einen Transporter 1 von der Seite mit einem seitlich angebrachten Halterungsrahmen 2 für die nahezu vertikale Halterung von plattenförmigen Gegenständen zum Transport. Am vorderen und hinteren Ende der Auflagefläche des Halterungsrahmens befindet sich eine Vorrichtung 3 zur Sicherung der Schrägstellung des Halterungsrahmens. Bei kleineren Fahrzeugen mit sehr kurzem Halterungsrahmen kann sich jedoch auch ausschließlich eine Abstützung mittig am Halterungsrahmen befinden.

Figur 2 zeigt den Transporter 1 von seiner Rückseite, wobei die Schrägstellung des am Transporter fest angebrachten Halterungsrahmens 2 erkennbar ist. Aus Figur 2 ist ferner entnehmbar, daß die Vorrichtung 3 zur Sicherung der Schrägstellung des Halterungsrahmens an dessen fahrzeugseitigem unteren Ende angebracht ist.

Gemäß den Figuren 3 bis 5 werden bei derartigen Transporterfahrzeugen verschiedene Anzeigen verwendet, um die Schrägstellung des Transportrahmens anzuzeigen. Es kann gemäß Figur 3 eine Digitalanzeigevorrichtung vorgesehen sein. Figur 4 zeigt Kontrolleuchten in rot und grün als optische Warneinrichtung und Figur 5 zeigt einen akustischen Signalgeber. All diese Vorrichtungen zeigen oder signalisieren eine zu geringe Schrägstellung des Halterungsrahmens optisch bzw. akustisch.

Am Fahrzeug oder dem Halterungsrahmen ist ein Neigungsmesser angebracht, der bei Unterschreiten einer bestimmten Mindestneigung, zum Beispiel von 4°, ein Signal an die Anzeigeeinrichtungen abgibt, so daß eine Bedienungsperson unmittelbar informiert wird, daß die Vorrichtung zur Sicherung der Schrägstellung vor dem mechanischen Entsichern der plattenförmigen Gegenstände oder Lösen von deren Halterungseinrichtungen durch die Vorrichtung zur Sicherung der Schrägstellung in die Mindestschrägstellung gebracht werden muß.

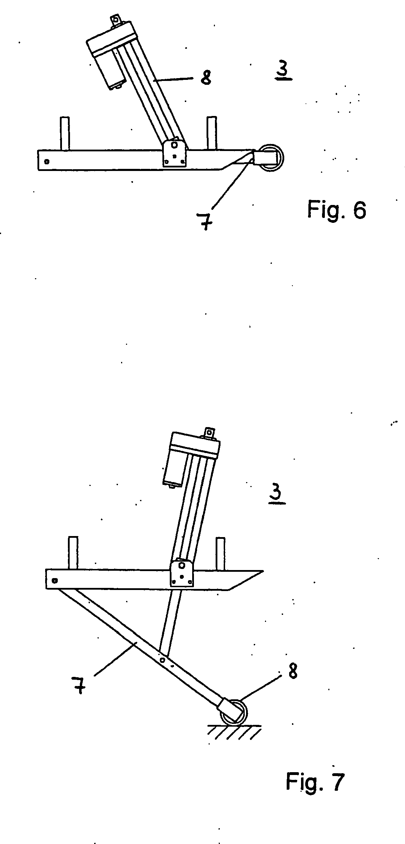

Bei dem dargestellten Ausführungsbeispiel sind gemäß Figur 6 ausfahrbare Abstützungen 1 derart ausgebildet, daß sie einen schwenkbaren Arm 7 aufweisen, der mit Hilfe einer Verschiebeeinrichtung 8 aus seiner Ruheposition schwenkbar ist. Figur 7 zeigt die ausfahrbare Abstützung 1 nach Figur 6 mit ausgefahrenem Schwenkarm 7. Am äußeren Ende des Schwenkarms befindet sich eine drehbare Abstützrolle 8, die im voll ausgefahrenen Zustand der Abstützung den Untergrund berührt.

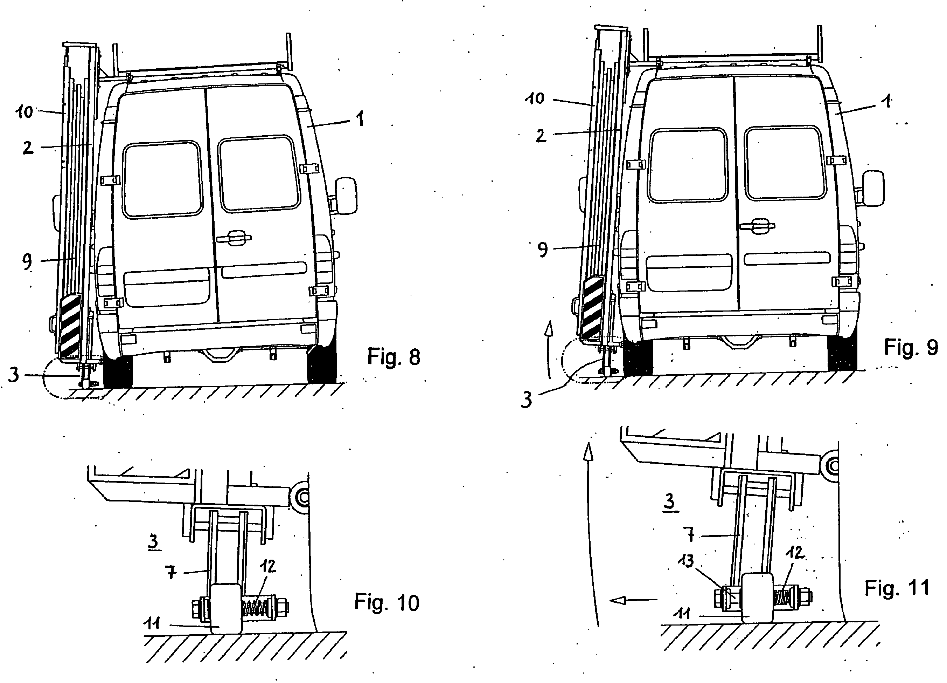

Figur 8 zeigt das Tranporterfahrzeug 1 nach Figur 1 von der Rückseite, wobei der Halterungsrahmen 2 mit plattenförmigen Gegenständen 9 beladen ist, die mit Hilfe von Spannlatten 10 gesichert sind. Das Transporterfahrzeug 1 weist wegen der Belastung durch die plattenförmigen Gegenstände eine Schieflage auf, da die Fahrzeugfedern auf der Transportgestellseite wesentlich mehr belastet sind als auf der anderen Seite des Transporterfahrzeugs. Die ausfahrbare Abstützung 3 ist soweit ausgefahren, daß sie gerade den Untergrund berührt. Sie stützt jedoch den Halterungsrahmen und damit das Fahrzeug nicht ab.

Figur 9 zeigt das Fahrzeug 1 nach Figur 8 von der Rückseite, wobei jedoch die ausfahrbare Abstützung 3 das beladene Transportgestell 2 abstützt und damit das Fahrzeug auf der beladenen Seite anhebt bzw. aus den Federn hebt. Das Fahrzeug ist damit optimal ausgerichtet und das Transportgestell erreicht eine Schrägstellung, die für eine sichere Anlage der plattenförmigen Gegenstände 9 an dem Transportgestell 2 sorgt. Die Spannlatten 10 können nunmehr abgenommen werden und die plattenförmigen Gegenstände können einzeln entladen werden.

Figur 10 zeigt die ausfahrbare Abstützung 3 mit einer drehbaren Abstützrolle 11, die an ihrem äußeren Ende angebracht ist. Die Abstützrolle weist eine Achse parallel zur Fahrzeugachse auf und ist in ihrer Achsrichtung seitlich gegenüber der Kraft einer Feder 12 verschiebbar. Wie man aus Figur 11 erkennt, wird beim Ausfahren der Abstützeinrichtung 3 eine seitliche Bewegung ihres äußeren Endes ausgeführt, so daß sich die Achse 13 entgegen der Kraft der Feder 12 seitlich versetzt.

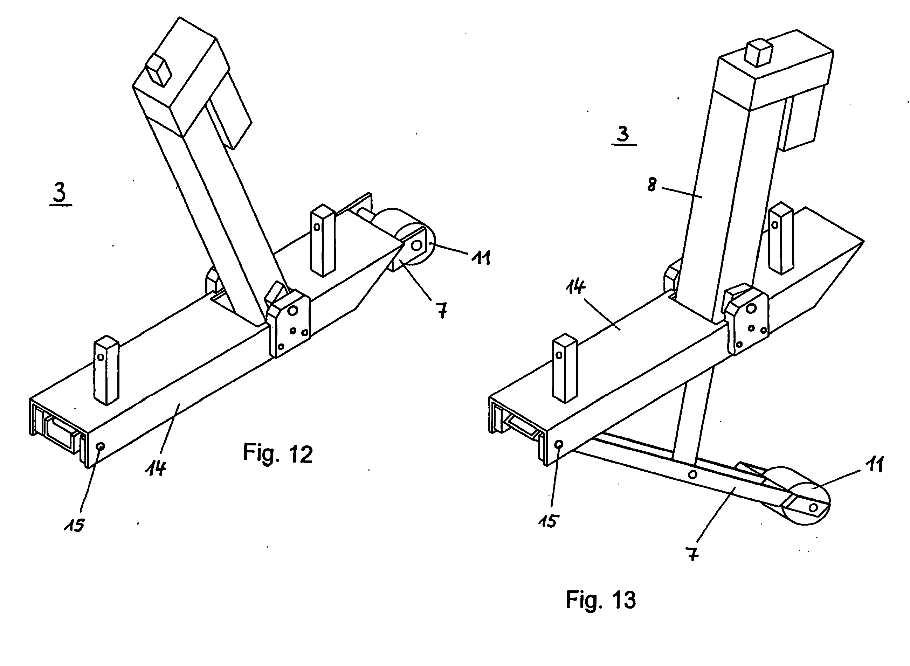

Figur 12 zeigt die ausfahrbare Abstützung 3 nach Figur 10 bzw. 11 in perspektivischer Darstellung und dabei befindet sich der Abstützungsarm 7 in einer Halterungskonsole 14, wobei er mit dem einen Ende der Halterungsschiene durch ein Drehgelenk verbunden ist. Am äußeren Ende des Abstützungsarms befindet sich die Abstützungsrolle.

Die Figur 13 zeigt die Abstützung 3 nach Figur 12, wobei der Abstützungsarm 7 mit dem Abstützungsrolle 11 sich im ausgefahrenen Zustand befindet. Dazu ist die Verschiebeeinrichtung 8 betätigt und der Abstützungsrahmen 7 wird um das Drehgelenk 15 der Konsole 14 geschwenkt. Der Abstützungsarm kann in der ausgeschwenkten Feststellung fixiert sein, die Verschiebeeinrichtung 8 ist hydraulisch, pneumatisch oder elektrisch betätigbar.

## Patentansprüche

1. Vorrichtung zur Sicherung der Schrägstellung eines einseitig oder beidseitig an einem Transporterfahrzeug oder kleineren Fahrzeug angebrachten, für den Transport von plattenförmigen Gegenständen vorgesehenen Halterungsrahmens während des Be- oder Entladens, wobei mindestens eine ausfahrbare Abstützung (3) einseitig oder beidseitig am Transportfahrzeug oder kleineren Fahrzeug angebrachten Halterungsrahmen (2) vorgesehen ist,
die in ihrem ausgefahrenen Zustand den Halterungsrahmen (2) in seiner Schrägstellung justiert,
**dadurch gekennzeichnet, daß** die ausfahrbare Abstützung (3) mindestens einen bis zum Untergrund schwenkbaren Arm (7) aufweist, und daß sich am äußeren Ende jedes Abstützungsarms (7) eine drehbare Abstützungsrolle (8;11) befindet.

2. Vorrichtung nach Anspruch 1,
**dadurch gekennzeichnet, daß** die ausfahrbare Abstützung (3) am Halterungsrahmen (2) angebracht ist.

3. Vorrichtung nach Anspruch 1 oder 2,
**dadurch gekennzeichnet, daß** die Abstützungsrolle (11) eine Achse (13) parallel zu den Fahrzeugachsen aufweist und auf dieser Achse (13) gegenüber der Kraft einer Feder (12) seitlich verschiebbar ist.

4. Vorrichtung nach einem der Ansprüche 1 bis 3,
**dadurch gekennzeichnet, daß** jeder schwenkbare Arm (7) mit Hilfe eines Drehgelenks (15) an einer Halterungskonsole (14) angebracht ist und in eine Ruheposition in den Profilraum der Halterungskonsole (14) einschwenkbar ist.

5. Vorrichtung nach einem der vorhergehenden Ansprüche,
**dadurch gekennzeichnet, daß** die ausfahrbare Abstützung (3) hydraulisch bewegbar ist.

6. Vorrichtung nach einem der Ansprüche 1 bis 4,
**dadurch gekennzeichnet, daß** die ausfahrbare Abstützung (3) pneumatisch betätigbar ist.

7. Vorrichtung nach einem der Ansprüche 1 bis 4,
**dadurch gekennzeichnet, daß** die Abstützung (3) elektrisch betätigbar ist.

8. Vorrichtung nach einem der vorhergehenden Ansprüche,
**dadurch gekennzeichnet, daß** sich am Fahrzeug oder am Halterungsrahmen ein Neigungsmesser befindet, der mit einer Anzeigevorrichtung (4) verbunden ist oder mit einer optischen oder akustischen Warneinrichtung (5 bzw. 6), die eine unzulässig geringe Neigung des Halterungsrahmens anzeigt.

## Claims

1. Device for securing the inclined position of a supporting frame attached on one side or both sides of a transport vehicle or smaller vehicle and provided for the transport of panel-shaped objects during loading or unloading, wherein at least one extensible support (3) is provided on the supporting frame (2) attached on one side or both sides of a transport vehicle or smaller vehicle, which in its extended state adjusts the supporting frame (2) in its inclined position, **characterised in that** the extensible support (3) has at least one arm (7), which can be pivoted as far as the substructure, and that a rotatable support roller (8; 11) is located on the outer end of each support arm (7).

2. Device according to claim 1, **characterised in that** the extensible support (3) is attached to the supporting frame (2).

3. Device according to claim 1 or 2, **characterised in that** the support roller (11) has an axle (13) parallel to the vehicle axles and is laterally displaceable on this axle (13) in relation to the force of a spring (12).

4. Device according to one of claims 1 to 3, **characterised in that** each pivoting arm (7) is attached to a mounting bracket (14) by means of a pivot (15) and can be pivoted into a resting position in the profile space of the mounting bracket (14).

5. Device according to one of the preceding claims, **characterised in that** the extensible support (3) is hydraulically movable.

6. Device according to one of claims 1 to 4, **characterised in that** the extensible support (3) is pneumatically operable.

7. Device according to one of claims 1 to 4, **characterised in that** the support (3) is electrically operable.

8. Device according to one of the preceding claims, **characterised in that** an inclinometer, which is connected to a display device (4) or to an optical or acoustic warning device (5 or 6), which displays an impermissibly low inclination of the supporting frame, is located on the vehicle or on the supporting frame.

## Revendications

1. Dispositif pour assurer l'inclinaison d'un cadre de fixation monté d'un côté ou des deux côtés sur un véhicule utilitaire ou un plus petit véhicule, prévu pour le transport d'objets en forme de plaques, pendant le chargement ou le déchargement, au moins un support déployable (3) étant prévu sur le cadre de fixation (2) monté d'un côté ou des deux côtés sur le véhicule utilitaire ou le plus petit véhicule, qui ajuste dans son état déployé le cadre de fixation (2) dans son inclinaison,
**caractérisé par le fait**
**que** le support déployable (3) présente au moins un bras (7) apte à pivoter jusqu'au sol, et qu'un rouleau d'appui tournant (8 ; 11) se trouve sur l'extrémité externe de chaque bras d'appui (7).

2. Dispositif selon la revendication 1,
**caractérisé par le fait que** le support déployable (3) est monté sur le cadre de fixation (2).

3. Dispositif selon l'une des revendications 1 ou 2,
**caractérisé par le fait**
**que** le rouleau d'appui (11) présente un axe (13) parallèle à l'axe du véhicule et est déplaçable latéralement sur cet axe (13) à l'encontre de la force d'un ressort (12).

4. Dispositif selon l'une des revendications 1 à 3,
**caractérisé par le fait**
**que** chaque bras apte à pivoter (7) est monté à l'aide d'une articulation tournante (15) sur une console de fixation (14) et, dans une position de repos, est apte à être introduit par pivotement dans l'espace intérieur de la console de fixation (14).

5. Dispositif selon l'une des revendications précédentes,
**caractérisé par le fait**
**que** le support déployable (3) est déplaçable hydrauliquement.

6. Dispositif selon l'une des revendications 1 à 4, **caractérisé par le fait**
**que** le support déployable (3) est actionnable pneumatiquement.

7. Dispositif selon l'une des revendications 1 à 4, **caractérisé par le fait que** le support (3) est actionnable électriquement.

8. Dispositif selon l'une des revendications précédentes, **caractérisé par le fait**
**Que**, sur le véhicule ou sur le cadre de fixation, se trouve un dispositif de mesure de l'inclinaison, lequel est lié avec un dispositif indicateur (4) ou avec un dispositif d'avertissement optique ou acoustique (5 ou 6), qui indique une inclinaison faible de façon inadmissible du cadre de fixation.
